(19) Europäisches Patentamt
European Patent Office
Office européen des brevets

(11) EP 0 536 765 B1

(12) **EUROPÄISCHE PATENTSCHRIFT**

(45) Veröffentlichungstag und Bekanntmachung des Hinweises auf die Patenterteilung:
**22.05.1996 Patentblatt 1996/21**

(21) Anmeldenummer: **92117235.9**

(22) Anmeldetag: **08.10.1992**

(51) Int Cl.6: **D06M 15/643**, D06M 13/144, D06M 13/224, D06M 13/165, D06M 13/328, C11D 3/37, C08J 3/03
// C08L83/08

(54) **Wässrige Zusammensetzungen mit stickstoffhaltigen Polysiloxanen**

Aqueous compositions with polysiloxanes containing nitrogen

Composition aqueuses à base de polysiloxanes contenant de l'azote

(84) Benannte Vertragsstaaten:
**AT BE CH DE DK ES FR GB IT LI NL PT SE**

(30) Priorität: **09.10.1991 DE 4133358**

(43) Veröffentlichungstag der Anmeldung:
**14.04.1993 Patentblatt 1993/15**

(73) Patentinhaber: **Pfersee Chemie GmbH**
**D-86460 Langweid a. Lech (DE)**

(72) Erfinder:
- **Bernheim, Michael, Dr.**
  **W-8901 Aystetten (DE)**
- **Chrobaczek, Harald, Dr.**
  **W-8900 Augsburg (DE)**
- **Tschida, Günther**
  **W-8930 Schwabmünchen (DE)**

(56) Entgegenhaltungen:
**EP-A- 0 407 042**
**EP-A- 0 418 479**
**EP-A- 0 441 530**
**EP-A- 0 442 098**
**WO-A-88/08436**
**US-A- 4 399 247**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 536 765 B1

Printed by Jouve, 75001 PARIS (FR)

## Beschreibung

Die Erfindung betrifft eine wäßrige Zusammensetzung in Form einer Lösung oder Dispersion, welche als Komponente a) ein Organopolysiloxan mit durchschnittlich mindestens einem an ein Siliciumatom gebundenen Rest R enthält, der über ein Kohlenstoffatom an dieses Siliciumatom gebunden ist, wobei der Rest R mindestens eine Aminogruppe oder eine Amidogruppe enthält. Sie betrifft ferner ein Verfahren zur Herstellung solcher Zusammensetzungen und die Verwendung solcher Zusammensetzungen zur Behandlung von Fasermaterialien.

Es ist bekannt, Fasermaterialien, insbesondere textile Flächengebilde, mit wäßrigen Dispersionen von Organopolysiloxanen zu behandeln, um den Fasermaterialien vorteilhafte Eigenschaften wie weichen Griff oder wasserabweisende Wirkung zu verleihen. Um weichen Griff zu erzielen, wurden hierfür bereits Organopolysiloxane vorgeschlagen, an welche Aminogruppen enthaltende Reste gebunden sind. Auch Organopolysiloxane mit Amidogruppen enthaltenden Substituenten und ihre Verwendung zur Behandlung von Fasermaterialien sind bereits aus dem Stand der Technik bekannt. Die genannten stickstoffhaltigen Organopolysiloxane sind beispielsweise in EP-A 0 342 830, EP-A 0 342 834, US 4 620 878 (= EP 0 138 192) und WO 88/08436 beschrieben.

Die in diesen Schriften genannten Dispersionen sind jedoch noch nicht in allen Punkten zufriedenstellend. So hat sich beispielsweise gezeigt, daß bei höher konzentrierten Dispersionen stickstoffhaltiger Organopolysiloxane, z.B. solchen mit mehr als 20 Gew.% an Organopolysiloxan, die Gefahr besteht, daß die Viskosität hohe Werte annimmt, und zwar vielfach bereits bei der Herstellung der Dispersion. Diese hohe Viskosität, die gelegentlich bis zum Gelzustand führt, stellt einen empfindlichen Nachteil bei der Handhabung der entsprechenden Dispersionen dar. Im Prinzip läßt sich in einer Reihe von Fällen durch Zusatz niedrigsiedender leicht flüchtiger Lösungsmittel wie Isopropanol eine Reduzierung der Viskosität dieser wäßrigen Dispersionen stickstoffhaltiger Organopolysiloxane erreichen. Jedoch ist der Zusatz solcher Lösungsmittel wegen ihres niedrigen Flammpunkts unerwünscht. Ein weiterer Nachteil ergibt sich, wenn man versucht, in Anlehnung an den Stand der Technik wäßrige Dispersionen von Organopolysiloxanen herzustellen, an die Substituenten gebunden sind, welche Piperazinylreste bzw. substituierte Piperazinylreste enthalten. Es hat sich gezeigt, daß solche Dispersionen, wenn sie mittels üblicher Dispergatoren und ohne sonstige Zusätze hergestellt werden, bei pH-Werten von mehr als etwa 5,0 häufig ungenügende Lagerstabilitäten aufweisen. Andererseits sind oft pH-Werte von mehr als 5,0 erwünscht, da niedrigere pH-Werte zu Schwierigkeiten führen können, wenn für die Behandlung von Textilmaterialien Cellulosevernetzer zusätzlich eingesetzt werden sollen.

Die EP-A 0 417 47 und die EP-A 0 374 471 beschreiben Zusammensetzungen, welche aminofunktionelle Siloxane und ein amphoteres Tensid enthalten und bestimmte (Di-) Propylenglykole zusätzlich enthalten können. Offensichtlich ging man also bisher davon aus, daß (Di-) Propylenglykole nur in Verbindung mit amphoteren bzw. ionischen Tensiden eingesetzt werden sollen. Amphotere und kationische Tenside weisen jedoch den Nachteil auf, daß sie vielfach die Vergilbungstendenz fördern. Anionische Tenside besitzen den Nachteil, daß Zusammensetzungen, welche sie enthalten, oft schlecht mit üblichen Cellulosevernetzem verträglich sind, was den Einsatz solcher Zusammensetzungen für Cellulose-Textilien limitiert.

Aufgabe der vorliegenden Erfindung war es daher, auch bei höheren pH-Werten als 5 lagerstabile wäßrige Zusammensetzungen stickstoffhaltiger Organopolysiloxane zur Verfügung zu stellen, darunter auch solcher, welche Piperazinylreste bzw. substituierte Piperazinylreste enthalten, wobei die Zusammensetzungen auch bei höheren Konzentrationen eine nicht zu hohe Viskosität aufweisen sollten und wobei diese Zusammensetzungen geringe Vergilbungsneigung auf Textilien bewirken und gut verträglich mit Cellulosevernetzem sein sollten.

Die Aufgabe wurde gelöst durch eine wäßrige Zusammensetzung in Form einer Lösung oder Dispersion gemäß Oberbegriff von Anspruch 1, die dadurch gekennzeichnet ist, daß die Zusammensetzung frei von amphoteren, kationischen und anionischen Tensiden ist und als Komponente b) eine Verbindung der Formel (I) oder ein Gemisch aus Verbindungen der Formel (I) enthält

$$R1 - \underset{\underset{X}{|}}{CH} - Y - O - R2 \qquad (I)$$

worin

X für - OH oder - $NH_2$ steht,

Y für

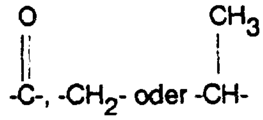

steht,

R1 für H oder $CH_3$ steht,
R2 für einen unverzweigten oder verzweigten Alkylrest mit 1 bis 4 Kohlenstoffatomen steht, der eine OH- oder eine -OR3-Gruppe als Substituenten aufweisen kann,
R3 für einen unverzweigten oder verzweigten Alkylrest mit 1 bis 4 Kohlenstoffatomen steht, der eine OH-Gruppe als Substituenten aufweisen kann.

Zusammensetzungen dieser Art können in vorteilhafter Weise nach dem in Anspruch 11 beschriebenen Verfahren hergestellt werden. Dieses Verfahren gemäß Anspruch 11 ist besonders gut geeignet zur Herstellung von Zusammensetzungen in Form von Dispersionen piperazinofunktioneller Organopolysiloxane. Unter piperazinofunktionellen Organopolysiloxanen werden Polysiloxane verstanden, welche Substituenten mit Piperazinylresten bzw. substituierten Piperazinylresten aufweisen, z.B. Polysiloxane, welche Piperazinringe mit N-Alkyl-, insbesondere N-Methylgruppen enthalten, wie sie in Anspruch 3 beschrieben sind. Mit diesem Verfahren lassen sich außerdem in vielen Fällen überaus stabile, feinteilige bis optisch-klare Mikroemulsionen erhalten. Mikroemulsionen von Organopolysiloxanen sind besonders gut für die Behandlung von Textilien geeignet und unter anderem in der EP 0 138 192 und in der WO 88/08436 beschrieben.

Die erfindungsgemäßen Zusammensetzungen besitzen folgende Vorteile:

1. Sie besitzen gute Lagerstabilitäten; dies gilt auch bei pH-Werten von 5 bis 7, was erwünscht ist, wenn mit den Zusammensetzungen Textilien aus Cellulosefasem unter Mitverwendung von Cellulosevernetzern behandelt werden sollen. Insbesondere Organopolysiloxane mit Piperazinringen enthaltenden Substituenten, die sich mit bisher bekannten Methoden bei gängigen Konzentrationen und gängigen pH-Werten nicht in lagerstabile Dispersionen überführen ließen, können erfindungsgemäß in Form stabiler Dispersionen erhalten werden. Vor allem, wenn als Dispergatoren nur nichtionogene Produkte verwendet werden, die alle einen HLB-Wert von mehr als 10 besitzen, besitzen die Zusammensetzungen Stabilitäten, die bisher nach Ansicht der Fachwelt nur bei Verwendung ionischer bzw. amphoterer Tenside erzielbar waren.

2. Sie lassen sich in vielen Fällen, insbesondere im Fall ihrer Herstellung nach dem neuen erfinderischen Verfahren gemäß Anspruch 11, als besonders stabile Mikroemulslonen erhalten.

3. Sie enthalten als die Viskosität herabsetzende Komponente keine Produkte mit niedrigem Flammpunkt.

4. Durch die Verwendung der in Anspruch 1 genannten Komponente b) lassen sich höher konzentrierte stabile Dispersionen mit akzeptabler Viskosität von amino- und/oder amidofunktionellen Organopolysiloxanen erhalten als dies bisher möglich war.

5. Die Behandlung von Textilien mit den erfindungsgemäßen Zusammensetzungen führt zu einem angenehm weichen Griff der Textilien bei gering ausgeprägter Vergilbungsneigung, vor allem bei Verwendung piperazinofunktioneller Polysiloxane.

6. Die Zusammensetzungen sind gut mit handelsüblichen Cellulosevernetzern verträglich.

Die erfindungsgemäßen wäßrigen Zusammensetzungen enthalten als Komponente a) ein Organopolysiloxan, In dem durchschnittlich mindestens ein Rest R an ein Siliciumatom gebunden ist. Die Aussage "durchschnittlich" bedeutet, daß auch einzelne Organopolysiloxanmoleküle vorliegen können, in denen kein Rest R enthalten ist, daß jedoch die Anzahl der insgesamt vorliegenden Reste R mindestens so groß sein muß wie die Anzahl der Organopolysiloxanmoleküle.

Unter Organopolysiloxanen werden Verbindungen verstanden, welche Gruppen der Art

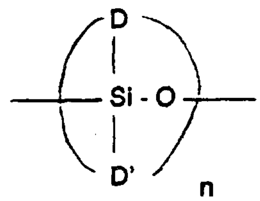

enthalten, in denen alle Substituenten D und D' einwertige organische Reste sind und n eine Zahl von mindestens 10 ist. Die Reste D und D' sind bevorzugt jeweils mittels eines Kohlenstoffatoms an das betreffende Siliciumatom gebunden. Durchschnittlich mindestens einer der Reste D oder D' pro Molekül muß ein Rest R der in Anspruch 1 genannten und unten näher erläuterten Art sein. Es können jedoch auch mehrere der Reste D und D' für einen solchen Rest R stehen, jedoch ist vorzugsweise an ein und dasselbe Si-Atom höchstens ein Rest R gebunden. In einer bevorzugten Ausführungsform der erfindungsgemäßen Zusammensetzungen sind die Organopolysiloxane von Polydimethylsiloxanen abgeleitet, d.h. alle Reste D und D' in Komponente a), welche nicht für einen Rest R stehen, sind vorzugsweise Methylgruppen. Ein Teil oder alle dieser Reste D und D' können jedoch auch für längere Alkylreste, z.B. mit 2 bis 4 C-Atomen oder für Phenylreste stehen. An den Enden der Polysiloxankette befinden sich bevorzugt HO-Si$(CH_3)_2$-Gruppen und/oder Trimethylsilylgruppen, es können sich jedoch an einem oder an beiden Kettenenden auch Reste R oder längere Alkylreste oder Phenylgruppen befinden. Vorzugsweise ist die Polysiloxankette unverzweigt, und die Anzahl n der

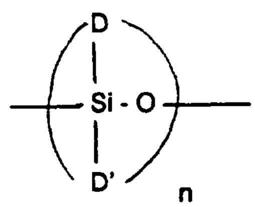

Einheiten liegt bevorzugt im Bereich von 50 bis 1000.

In den erfindungsgemäßen Zusammensetzungen enthält das Organopolysiloxan (Komponente a)) durchschnittlich mindestens einen Rest R pro Siloxanmolekül. Dieser Rest R ist ein einwertiger organischer Rest, der mittels eines Kohlenstoffatoms an ein Siliciumatom gebunden ist, d.h. an demjenigen Ende des Restes R, das an die Siloxankette gebunden ist, befindet sich ein C-Atom. Der Rest R stellt vorzugsweise eine Seitenkette eines unverzweigten Organopolysiloxans dar, d.h. eines Organopolysiloxans, bei dem an kein Si-Atom mehr als zwei Sauerstoffatome gebunden sind. Das Organopolysiloxan kann durchschnittlich auch mehr als einen Rest R pro Polysiloxanmolekül enthalten, bevorzugt jedoch befinden sich nicht zwei Reste R am gleichen Si-Atom. Der Rest R enthält mindestens eine Amino- oder Amidogruppe. Er kann jedoch auch sowohl eine Aminogruppe als auch eine Amidogruppe oder mehrere Aminogruppen enthalten. Außerdem können in dem Organopolysiloxan mehrere verschiedene Reste R enthalten sein, von denen manche eine Aminogruppe und andere eine Amidogruppe enthalten. Der Rest R ist bevorzugt ein linearer oder verzweigter organischer Rest, der keine Kohlenstoff-Kohlenstoff-Doppel-oder Dreifachbindungen enthält. Die Aminogruppe oder Amidogruppe, welche das Organopolysiloxan enthalten muß, kann entweder in einem offenkettigen Rest R vorliegen, d.h. einem Rest, welcher keine homocyclischen oder heterocyclischen Ringe enthält, sie kann jedoch auch Teil eines heterocyclischen Ringes sein. Bevorzugt sind hierfür insbesondere nichtaromatische heterocyclische Ringe ohne Mehrfachbindungen. Falls der Rest R offenkettig ist und Aminogruppen enthält, sind primäre oder sekundäre Aminogruppen bevorzugt. Besonders günstige Ergebnisse bezüglich weichem Griff werden erhalten, wenn man für die Behandlung von Fasermaterialien erfindungsgemäße Zusammensetzungen verwendet, in denen der Rest R entweder einen Piperazinring enthält oder ein Rest ist, der einer der nachfolgenden Formeln (II), (III) oder (IV) entspricht, (im Fall der Formel III kommt noch der Vorteil hinzu, daß die Vergilbungstendenz noch niedriger ist als in den übrigen Fällen:

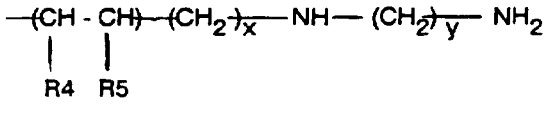

(II)

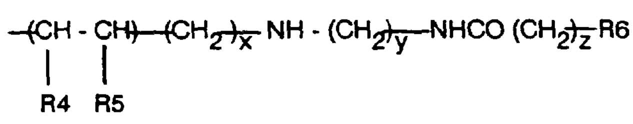

(III)

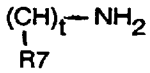

(IV)

worin alle Reste R4 und R5 und R7 unabhängig voneinander für Wasserstoff oder eine Methylgruppe stehen, mindestens einer der Reste R4 und R5 jedoch für Wasserstoff steht, x eine Zahl von 0 bis 3, t, y und z je eine Zahl von 2 bis 4, R6 Wasserstoff oder eine Hydroxylgruppe ist.

Falls der Rest R einen Piperazinring enthält, ist es bevorzugt, wenn der (in Komponente a) enthaltene) Rest R ein Rest der allgemeinen Formel

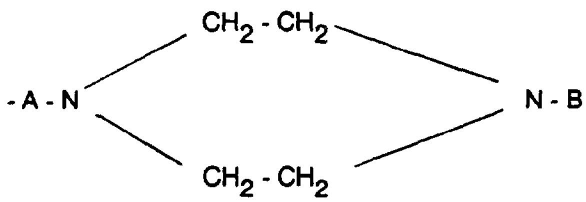

ist, worin A für einen Alkylenrest mit 1 bis 6 Kohlenstoffatomen steht, der durch eine - O -, - S - oder - NH -Brücke unterbrochen sein kann, und B für Wasserstoff oder einen Alkylrest mit 1 bis 4 Kohlenstoffatomen, vorzugsweise für $CH_3$, steht.

Gut als Komponente a) geeignet sind auch Polysiloxane, die einen oder mehrere der folgenden Reste an je ein Si-Atom gebunden enthalten:

$$-(CH_2)_3-NH-CH_3$$

$$-(CH_2)_3-NH-(CH_2)_3-CH_3$$

$$-(CH_2)_3-NH-C_6H_{11}$$ (Cyclohexylrest)

$$-(CH_2)_3-NH-CO-CH_3$$

$$-(CH_2)_3-NH-(CH_2)_2-NH-CO-CH_3$$

Zusätzlich zu den beschriebenen Amino- oder Amidogruppen können in den als Komponente a) verwendeten Organopolysiloxanen weitere funktionelle Gruppen vorliegen, z.B. Hydroxylgruppen oder Polyoxyethylengruppen. Diese können entweder Bestandteil des Restes R sein oder zusätzlich zum Rest R vorliegen, sie können ggf. auch direkt an ein Si-Atom gebunden sein. Außerdem können Organopolysiloxane, welche Hydroxylgruppen oder andere funktionelle Gruppen aufweisen, zusätzlich zu der beschriebenen Komponente a) in den erfindungsgemäßen Zusammensetzungen anwesend sein.

Als Komponente a) verwendbare Organosiloxane, welche einen Rest R enthalten, sind im Handel erhältlich. Geeignete Produkte und ihre Herstellung sind in EP-A 0 342 830, EP-A 0 342 834, US 4 620 878 (= EP 0 138 192), WO 88/08436 sowie in der DE-A 39 26 005, der DE-A 40 07 136, der DE-A 37 30 413, der US 3 655 420 und in der US 4 496 705 beschrieben.

Andere bevorzugte Organopolysiloxane, nämlich solche, bei denen der Rest R einen Piperazinring enthält, sind bekannte Produkte. Geeignete Vertreter und ihre Herstellung werden in der EP-A2 0 441 530 beschrieben; siehe außerdem Chemical Abstracts 109(2):7746a (Referat über JP-A 63-67759), Chemical Abstracts 108(6):39302y (Referat über JP-A 62-210654), US 4511701, Chemical Abstracts 99(6):39577n.

In einer bevorzugten Ausführungsform der erfindungsgemäßen Zusammensetzungen werden als Komponente a) Organopolysiloxane verwendet, in denen bestimmte Bereiche für die Anzahl der anwenden Reste R im Verhältnis zur Anzahl der anwesenden Siliciumatome eingehalten sind.

Falls die Anzahl der Reste R geringer ist als es diesem bevorzugten Bereich entspricht, so ist der Effekt, den der Rest R ausübt, noch nicht in allen Fällen optimal; falls sie höher ist, können sich die Kosten der Produkte ohne nennenswerte Effektsteigerung erhöhen. Der günstige Bereich für den durchschnittlichen Gehalt an Resten R ist dann erreicht, wenn in Komponente a) durchschnittlich 5 bis 1000 Siliciumatome, an welche kein Rest R gebunden ist, pro Siliciumatom, an das ein Rest R gebunden ist, enthalten sind.

Der bei einem bestimmten Polysiloxan tatsächlich vorliegende Wert für dieses Verhältnis (von Si-Atomen ohne Rest R zu Si-Atomen mit Rest R) läßt sich ermitteln über $^{29}Si$-NMR-Spektroskopie - ggf. in Verbindung mit einer Stickstoff - bzw. Aminogruppenbestimmung. Der Wert für dieses Verhältnis läßt sich bei der Synthese entsprechender Organopolysiloxane steuern.

Außer den beschriebenen Organopolysiloxanen (Komponente a)) müssen die erfindungsgemäßen Zusammensetzungen noch eine Komponente b) enthalten. Diese Komponente b) wird in Anspruch 1 beschrieben, bevorzugt als Komponente b) verwendete Substanzen gehen aus Anspruch 2 hervor. Die Komponente b) ist entscheidend für die Erzielung von einigen Vorteilen erfindungsgemäßer Zusammensetzungen, wie z.B. Lagerstabilität von Dispersionen piperazinofunktioneller Organopolysiloxane bei pH-Werten von mehr als 5, sowie Verminderung der Viskositäten von Dispersionen im Fall von höheren Konzentrationen an Organopolysiloxanen.

Die Komponente b) ist eine Verbindung der nachfolgenden Formel (I) oder ein Gemisch aus mehreren Verbindungen, welche unter die Formel (I) fallen

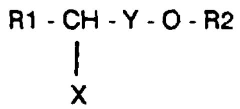 (I)

In dieser Formel (I) stehen:

X für -OH oder $-NH_2$,

Y für

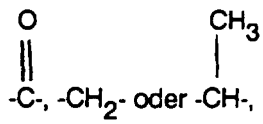

R1 für H oder $CH_3$,
R2 für einen unverzweigten oder verzweigten Alkylrest mit 1 bis 4 Kohlenstoffatomen, der eine OH- oder eine -OR3-Gruppe als Substituenten aufweisen kann
R3 für einen unverzweigten oder verzweigten Alkylrest mit 1 bis 4 Kohlenstoffatomen, der eine OH-Gruppe als Substituenten aufweisen kann.

Bevorzugte Vertreter solcher Verbindungen sind Methyllactat, (R1 = CH3, X = OH, Y = CO, R2 = CH3), Ethyllactat (R2 = C2H5), Isopropyllactat sowie Ether, die sich durch Abspaltung eines Moleküls Wasser aus zwei Molekülen Propylenglykol (1.2) ableiten.

Diese Ether des Propylenglykols (1.2) können folgende Vertreter der allgemeinen Formel (I) sein:

i) $CH_3-CH(OH)-CH_2-O-CH_2-CH(OH)-CH_3$

($R1 = CH_3$, $X = OH$, $Y = CH_2$, $R2 = -CH_2-CH(OH)-CH_3$)

ii) $CH_3-CH(OH)-CH_2-O-CH(CH_3)-CH_2OH$

($R1 = CH_3$, $X = OH$, $Y = CH_2$, $R2 = -CH(CH_3)-CH_2OH$)

iii) $H-CH(OH)-CH(CH_3)-O-CH(CH_3)-CH_2OH$

($R1 = H$, $X = OH$, $Y = CH(CH_3)$, $R_2 = -CH(CH_3)-CH_2OH$)

Auch mit einer Mischung dieser drei Isomeren i), ii), iii), sowie mit einer Mischung aus Methyllactat und einem oder mehreren der Isomeren i) ii) und iii) werden sehr gute Ergebnisse erhalten. Möglich ist es zum Beispiel, als Komponente b) eine Mischung aus Methyllactat und einem Gemisch aus den Isomeren i) ii) und iii) einzusetzen. Die Ursache, warum die in den Ansprüchen 1 und 2 aufgeführten Verbindungen (Komponente b) zu den genannten Vorteilen der erfindungsgemäßen Zusammensetzungen wie erhöhter Lagerstabilität führen, ist nicht bekannt. Möglicherweise spielt hierfür die gemeinsame Struktureinheit

HO-C-C-OR2

bzw.

$H_2N$-C-C-OR2

eine Rolle.

Sofern nicht das Gemisch aus Wasser und den Komponenten a) und b) in den gewünschten relativen Mengenverhältnissen zueinander bereits ohne wertere Zusätze eine homogene, stabile wäßrige Lösung oder Dispersion ergibt, müssen die erfindungsgemäßen Zusammensetzungen noch einen oder mehrere Dispergatoren enthalten, um zu stabilen Dispersionen zu gelangen. Bevorzugt enthalten die erfindungsgemäßen Zusammensetzungen in diesem Fall als eine zusätzliche Komponente c) einen Dispergator oder ein Gemisch von Dispergatoren. Bei Komponente c) handelt es sich hierbei um einen bzw. mehrere nichtionogene Dispergatoren.

Als nichtionogene Dispergatoren kommen z.B. ethoxilierte Alkohole wie ethoxilierter Isotridecylalkohol, ethoxilierte

Fettsäuren und ethoxilierte Fettamine in Betracht, insbesondere ethoxilierte Produkte mit einem HLB-Wert von mehr als 10. Werden Gemische von Dispergatoren verwendet, haben alle Einzelbestandteile dieses Gemisches vorzugsweise einen HLB-Wert von mehr als 10.

Eine weitere geeignete Klasse von Dispergatoren sind Alkylpolyglykoside. Alkylpolyglykoside sind als Dispergatoren für die Dispergierung von Polydimethylsiloxanen bereits als geeignete, auf dem Markt erhältliche Produkte bekannt, die gegenüber einer Reihe anderer Typen von Dispergatoren Vorteile bezüglich Abbaubarkeit und Umwelteigenschaften aufweisen. Für die Verwendung als Komponente c) der erfindungsgemäßen Zusammensetzungen sind unter anderem Alkylpolyglykoside der Formel

$$L\text{-}O\text{-}Z_n \text{ oder der } L\text{-}C(O)\text{-}O\text{-}Z_n$$

geeignet. L bedeutet hierbei einen linearen oder verzweigten, gesättigten oder ungesättigten Alkylrest mit 8 bis 16 Kohlenstoffatomen, Z einen Oligoglykosidrest und n im Mittel eine Zahl von 1 bis 5. Alkylpolyglykoside der Formel $L\text{-}O\text{-}Z_n$ sind in der DE-A1 39 25 846 beschrieben.

In einer weiteren bevorzugten Ausführungsform der erfindungsgemäßen Zusammensetzungen enthalten diese außer den Komponenten a), b) und ggf. c) noch eine Komponente d). Dies ist ein dispergiertes Polyethylenwachs, erhältlich durch Dispergierung eines Polyethylenwachses nach entsprechender Modifizierung des Polyethylens. Die Modifizierung kann beispielsweise darin bestehen, daß durch Oxidation saure (-COOH) Gruppen gebildet wurden. Geeignete modifizierte Polyethylenwachse bzw. Polyethylenwachsdispersionen sind im Handel erhältlich und in der EP-A2 0 412 324, sowie in der US 4 211 815, der DE-A 2 824 716 und der DE-A 1 925 993 beschrieben. Dort finden sich auch Angaben über deren Herstellung. Durch die zusätzliche Verwendung eines dispergierten Polyethylenwachses in den erfindungsgemäßen Zusammensetzungen läßt sich die Menge an Komponente a) etwas niedriger halten, wodurch Kostenvorteile resultieren. Außerdem lassen sich hierdurch, wenn gewünscht, Griff und Oberfläche der mit den Zusammensetzungen behandelten Fasermaterialien beeinflussen. Welche Menge an Komponente a) durch Polyethylenwachs ersetzt werden kann, bzw. welche Menge an Polyethylenwachs auch ohne Reduzierung der Menge an Komponente a) zusätzlich verwendet werden kann, hängt im Einzelfall von den an die Zusammensetzung bzw. an das ausgerüstete Textil gestellten Anforderungen ab.

Bevorzugt enthält eine erfindungsgemäße Zusammensetzung die Komponenten a) bis d) und Wasser in folgenden relativen Gewichtsverhältnissen zueinander:

| | | | | |
|---|---|---|---|---|
| Komponente a): | 5 | bis | 40 | Gew.teile |
| Komponente b): | 5 | bis | 10 | Gew.teile |
| Komponente c): | 0 | bis | 15 | Gew.teile |
| Komponente d): | 0 | bis | 15 | Gew.teile |
| Wasser: | 40 | bis | 80 | Gew.teile. |

Diese Werte beziehen sich für die Komponenten a) bis d) auf wasserfreie Produkte.

Erfindungsgemäße Zusammensetzungen können nach üblichen, dem Fachmann geläufigen Methoden hergestellt werden, z.B. Indem man Wasser, eine Komponente b) und einen Dispergator oder ein Dispergatorgemisch vorlegt und das Organopolysiloxan (Komponente a))einrührt, ggf. bei erhöhter Temperatur und unter Zuhilfenahme geeigneter bekannter Homogenisierungsvorrichtungen. Falls eine Komponente d) (Polyethylenwachs) mitverwendet werden soll, empfiehlt es sich, Komponente d) in einem getrennten Schritt für sich allein zu dispergieren und die Dispersion des Polyethylenwachses mit der getrennt hergestellten Dispersion, welche die Komponenten a), b) und c) enthält, zu vereinigen. Verfahren zur Herstellung von Dispersionen, welche amidofunktionelle Polysiloxane und Polyethylenwachse enthalten, gehen aus der EP-A2 0 412 324 hervor.

Ein besonders bevorzugtes Verfahren zur Herstellung erfindungsgemäßer Zusammensetzungen besteht darin, daß man eine Komponente a), die einen, ggfs. substituierten, Piperazinylrest der oben beschriebenen Art enthält, Wasser und eine Komponente c) miteinander vereinigt, mittels Zugabe einer Säure einen pH-Wert von 3,5 bis 4,0 einstellt, das Gemisch bei einer Temperatur im Bereich von 60 bis 110°C homogenisiert, Komponente b) und gegebenenfalls Komponente d) hinzufügt. Falls eine Komponente d) (dispergiertes Polyethylenwachs) hinzugefügt wird, geschieht dies zweckmäßigerweise erst nach Abkühlung des Gemisches. Der Verfahrensschritt des Homogenisierens bei 60 bis 110°C bedeutet hierbei nicht unbedingt eine aufwendige Homogenisierung mittels komplizierter Vorrichtungen, sondem es kann ggf. - je nach Art des Systems - die Homogenisierung bereits durch kurzzeitiges leichtes Rühren bewirkt werden. "Homogenisieren" bedeutet also in diesem Zusammenhang irgendeine geeignete Maßnahme zur Erzielung eines homogenen Systems.

Man stellt also zuerst eine Mischung aus Wasser, einem piperazinofunktionellen Organopolysiloxan (Komponente a) wie oben beschrieben) und einem Dispergator oder einem Dispergatorgemisch (Komponente c)) her. Mittels Zugabe einer Säure, vorzugsweise einer verdünnten wäßrigen Lösung der Säure wird ein pH-Wert von 3,5 bis 4,0 eingestellt,

und das Gemisch wird anschließend bei einer Temperatur im Bereich von 60 bis 110°C homogenisiert. Die Homogenisierung erfolgt durch geeignete Vorrichtungen und gegebenenfalls unter erhöhtem Druck. Besonders geeignet als Säuren haben sich starke Mineralsäuren, insbesondere Schwefelsäure oder Salzsäure erwiesen. Nach der Homogenisierung wird Komponente b), nämlich eine Verbindung der Formel (I)

$$R1\text{-}CH(X)\text{-}Y\text{-}O\text{-}R2 \quad (I)$$

oder ein Gemisch von Verbindungen der Formel (I) zugegeben. Falls eine Komponente d) (dispergiertes Polyethylenwachs) verwendet werden soll, wird diese auch nach der Homogenisierung zugegeben, zweckmäßigerweise bei Raumtemperatur in Form einer separat hergestellten Dispersion.

Mit dem beschriebenen Verfahren lassen sich erfindungsgemäße Zusammensetzungen in vielen Fällen in Form besonders stabiler Mikroemulsionen erhalten; dies gilt in erster Linie dann, wenn die Zusammensetzungen Komponente d) nicht enthalten.

Gemäß einer vorteilhaften Variante kann man bei der Durchführung des Verfahrens folgendermaßen vorgehen:

Man stellt nach der Homogenisierung den pH-Wert der Dispersion durch Zugabe einer Base auf einen Wert von 5,5 bis 7 ein. Die Zugabe der Base erfolgt vorzugsweise nach Abkühlung auf Raumtemperatur. Geeignet hierfür sind vor allem starke Basen wie Natriumhydroxid oder Kaliumhydroxid, die zweckmäßigerweise in Form einer verdünnten wäßrigen Lösung eingesetzt werden. Die Komponente b), z.B. Methyllactat oder eine andere Verbindung der Formel (I) bzw. ein Gemisch solcher Verbindungen, setzt man zweckmäßigerweise vor Zugabe der Base zu. Die Komponente b) kann aber auch nach Zugabe der Base hinzugefügt werden. Falls eine Dispersion eines Polyethylenwachses mitverwendet werden soll, wird diese zweckmäßigerweise erst nach der Base hinzugefügt.

Die Einstellung eines pH-Werts von 5,5 bis 7 hat den Vorteil, daß in diesem Fall erfindungsgemäße Dispersionen mit üblichen Cellulosevernetzern kombiniert und anschließend zur Behandlung von Fasermaterialien aus Cellulose eingesetzt werden können, ggf. nach Zusatz weiterer Mittel und nach Verdünnung mit Wasser. Bei der Kombination von erfindungsgemäßen Dispersionen mit Cellulosevernetzern lassen sich Flotten erhalten, die auch bei erhöhten Temperaturen stabil sind.

Die erfindungsgemäßen Zusammensetzungen eignen sich gut für die Behandlung von Fasermaterialien, insbesondere von Flächengebilden aus Fasermaterialien. Vor allem die Behandlung von Testilmaterialien mit erfindungsgemäßen Zusammensetzungen führt zu Artikeln mit angenehm weichem Griff bei nur gering oder überhaupt nicht ausgeprägter Vergilbungstendenz. Die Behandlung der Fasermaterialien mit erfindungsgemäßen Zusammensetzungen kann nach bekannten Methoden geschehen, z.B. in einem Foulardprozeß.

Gegebenenfalls werden die Zusammensetzungen vor ihrer Anwendung noch mit Wasser auf eine niedrigere Konzentration verdünnt. Nach Behandlung werden die Faser- bzw. Textilmaterialien in bekannter Weise weiterverarbeitet, z.B. getrocknet und dann ggf. noch bei erhöhter Temperatur behandelt. Textilmaterialien, welche vorteilhaft mit erfindungsgemäßen Zusammensetzungen behandelt werden können, sind z.B. Artikel, welche aus Cellulosefasern bestehen oder Cellulosefasern enthalten. Den erfindungsgemäßen Zusammensetzungen können vor ihrer Anwendung noch weitere Mittel zugesetzt werden, welche üblicherweise für die Behandlung von Fasermaterialien verwendet werden. Auf diese Weise können, wenn dies gewünscht wird, weitere Effekte der Textilausrüstung erzielt werden. Bekannte Textilausrüstungsmittel, welche den erfindungsgemäßen Dispersionen zugesetzt werden können, sind beispielsweise Cellulosevernetzer oder bekannte Weichgriffmittel, z.B. auf Basis von Fettsäurealkanolamiden.

Die Erfindung wird nunmehr durch Ausführungsbeispiele veranschaulicht.

Beispiel 1 (erfindungsgemäß)

Eine Mischung aus 9,9 Gew.teilen ethoxiliertem Isotridecylalkohol mit durchschnittlich 6 Oxyethyleneinheiten, 2,1 Gew.teilen eines ethoxilierten Isotridecylalkohols mit durchschnittlich 7 Oxyethyleneinheiten, 40 Gew.teilen Wasser, 0,8 Gew.teilen 60%iger Essigsäure und 36 Gew.teilen eines aminofunktionellen Polysiloxans wurden unter Rühren auf 70°C erhitzt und 5 Minuten bei dieser Temperatur gehalten. Das verwendete Polysiloxan war ein Polydimethylsiloxan mit Trimethylsilyl-Endgruppen, in dem ein Teil der Methylreste durch stickstoffhaltige Reste ersetzt war, die im wesentlichen der oben und in Anspruch 4 angegebenen Formel (II) entsprachen. Durch dieses 5-minütige Rühren bei 70°C wurde die Homogenisierung der Mischung bewirkt.

Zu der 70°C warmen Mischung wurden 10 Gew.teile eines Gemisches von isomeren Ethern zugegeben, die sich durch Abspaltung von 1 Molekül Wasser aus 2 Molekülen 1.2-Propylenglykol ableiten.

Beispiel 2 (nicht erfindungsgemäßes Vergleichsbeispiel)

Beispiel 1 wurde mit folgenden Abänderungen wiederholt: Es wurde kein Gemisch an isomeren Ethern des 1.2-Propylenglykols zugesetzt, und die eingesetzte Menge an Wasser betrug 50 Gew.teile (statt 40 Gew.teile), so daß das erhaltene Endprodukt den gleichen prozentualen Anteil an Polysiloxan und an Emulgatoren aufwies wie in Beispiel 1.

In nachfolgender Gegenüberstellung werden die Daten der nach Beispiel 1 und Beispiel 2 erhaltenen Produkte verglichen:

| | Beispiel 1 | Beispiel 2 |
|---|---|---|
| Art des Produktes | dünnflüssige, transparente Dispersion | transparente Paste |
| pH-Wert | 5,3 | 5,2 |
| NTU | 42,3 | 40,9 |
| Viskosität (cP) | 310 | 200 000 |
| Verdünnbarkeit | gut | schlecht |

Die Messung der Viskosität erfolgte mit einem Brookfleld-Viskosimeter. Die NTU (nephelometrische Trübungseinheit) stellt ein Maß für die optische Trübung einer Probe dar. Sie wurde mit dem Nephelometer "Analite" der Firma Novasina AG, Pfäffikon, Schweiz, gemessen.

Beispiel 3 (erfindungsgemäß)

10 Gew.teile eines Isotridecylalkohols mit durchschnittlich 6 Oxyethylen-Einheiten, 61 Gew.teile Wasser, 0,55 Gew. teile 30%iger Salzsäure und 15 Gew.teile eines piperazinofunktionellen Polysiloxans wurden unter Rühren auf 70°C erhitzt und 5 Minuten bei dieser Temperatur gehalten. Anschließend wurde auf Raumtemperatur abgekühlt und es wurden 10 Gew.teile Methyllactat zugegeben. Nach der Zugabe des Methyllactats wurde die Mischung noch einige Minuten bei Raumtemperatur gerührt. Anschließend wurden 1,4 Gew.teile 10 %iger Natronlauge hinzugefügt.

Beispiel 4 (nicht erfindungsgemäßes Vergleichsbelspiel)

Beispiel 3 wurde mit folgenden Abänderungen wiederholt:

Es erfolgte keine Zugabe von Methyllactat, und die verwendete Menge Wasser betrug 71 (statt 61) Gew.teile.

Das in den Beispielen 3 und 4 verwendete Polysiloxan entsprach im wesentlichen der Formel, die auf Seite 6, Zeile 55 der EP-A2 0 441 530 angegeben ist.

Die nach Beispiel 3 erhaltene Dispersion war klar und transparent (NTU = 47) und wies einen pH-Wert von 6,0 auf. Die nach Beispiel 4 erhaltene Dispersion war stark getrübt (NTU = 180) und wies ebenfalls einen pH-Wert von 6,0 auf.

Beispiel 5 (erfindungsgemäß)

Eine Mischung von 20 Gew.teilen eines Alkylpolyglykosids (Dispergator), 60 Gew.teilen Wasser, 2 Gew.teilen 60%iger Essigsäure und 15 Gew.teilen eines Polysiloxanes wurde unter Rühren auf 70°C erhitzt und 5 Minuten bei dieser Temperatur gehalten. Zu der 70°C warmen Mischung wurden 3 Gew.teile Methyllactat hinzugefügt, anschließend wurde auf Raumtemperatur abgekühlt. Man erhielt eine transparente leicht gelbliche Dispersion (NTU = 18). Das verwendete Polysiloxan enthielt als Seitenketten an Si-Atome gebundene N-Cyclohexyl-3-aminopropyl-Reste. Solche Produkte sind In der DE-A1 37 30 413 beschrieben. Das verwendete Alkylpolyglykosid war ein Produkt der Art, wie sie in der DE-A1 39 25 846 beschrieben sind und entsprach der allgemeinen Formel $L\text{-}O\text{-}Z_n$, wobei L für einen Alkylrest mit durchschnittlich 10 bis 12 Kohlenstoffatomen steht und Z für einen Oligoglucosidrest.

**Patentansprüche**

1. Wäßrige Zusammensetzung in Form einer Lösung oder Dispersion, welche als Komponente a) ein Organopolysiloxan mit durchschnittlich mindestens einem an ein Siliciumatom gebundenen Rest R enthält, der über ein Kohlenstoffatom an dieses Siliciumatom gebunden ist, wobei der Rest R mindestens eine Aminogruppe oder eine Amidogruppe enthält, dadurch gekennzeichnet, daß die Zusammensetzung frei von amphoteren und frei von ionischen Tensiden ist und als Komponente b) eine Verbindung der Formel (I) oder ein Gemisch aus Verbindungen der Formel (I) enthält

$$R1 - \underset{\substack{| \\ X}}{CH} - Y - O - R2 \qquad (I)$$

worin

X für - OH oder - $NH_2$ steht
Y für

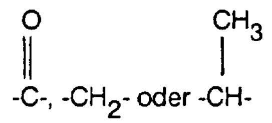

steht
R1 für H oder $CH_3$ steht
R2 für einen unverzweigten oder verzweigten Alkylrest mit 1 bis 4 Kohlenstoffatomen steht, der eine OH- oder eine -OR3-Gruppe als Substituenten aufweisen kann
R3 für einen unverzweigten oder verzweigten Alkylrest mit 1 bis 4 Kohlenstoffatomen steht, der eine OH-Gruppe als Substituenten aufweisen kann.

**2.** Zusammensetzung nach Patentanspruch 1, dadurch gekennzeichnet, daß Komponente b) Methyllactat, Ethyllactat, Isopropyllactat oder ein Ether ist, der sich durch Abspaltung von 1 Molekül Wasser aus zwei Molekülen Propylenglykol-(1,2) ableitet, oder daß Komponente b) ein Gemisch solcher Verbindungen ist.

**3.** Zusammensetzung nach Patentanspruch 1 oder 2, dadurch gekennzeichnet, daß der in Komponente a) enthaltene Rest R ein Rest der allgemeinen Formel

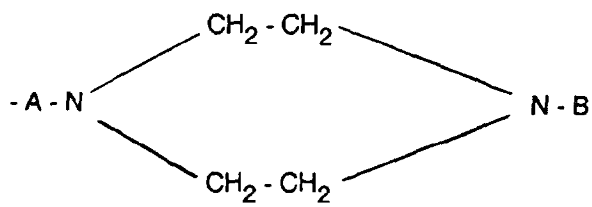

ist, worin A für einen Alkylenrest mit 1 bis 6 Kohlenstoffatomen steht, der durch eine - O -, - S - oder - NH -Brücke unterbrochen sein kann, und B für Wasserstoff oder einen Alkylrest mit 1 bis 4 Kohlenstoffatomen, vorzugsweise für $CH_3$, steht.

**4.** Zusammensetzung nach Patentanspruch 1 oder 2, dadurch gekennzeichnet, daß der in Komponente a) enthaltene Rest R ein Rest der allgemeinen Formel (11), (III) oder (IV)

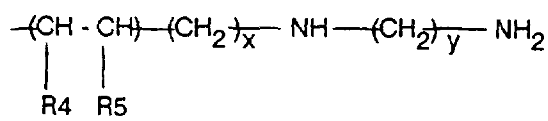

(II)

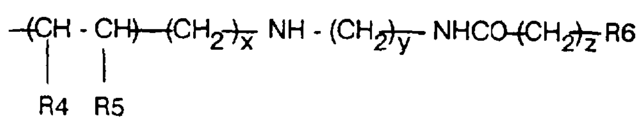

(III)

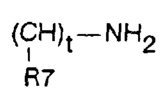

(IV)

ist, worin alle Reste R4 und R5 und R7 unabhängig voneinander für Wasserstoff oder eine Methylgruppe stehen, mindestens einer der Reste R4 und R5 jedoch für Wasserstoff steht, x eine Zahl von 0 bis 3, t, y und z je eine Zahl von 2 bis 4, R6 Wasserstoff oder eine Hydroxylgruppe ist.

**5.** Zusammensetzung nach einem oder mehreren der Patentansprüche 1 bis 4, dadurch gekennzeichnet, daß Komponente a) ein Polydimethylsiloxan ist, in dem eine oder mehrere Methylgruppen jeweils durch einen Rest R ersetzt sind, jedoch höchstens eine Methylgruppe an ein und demselben Si-Atom.

**6.** Zusammensetzung nach einem oder mehreren der Patentansprüche 1 bis 5, dadurch gekennzeichnet, daß in

Komponente a) durchschnittlich 5 bis 1000 Siliciumatome, an welche kein Rest R gebunden ist, pro Siliciumatom, an das ein Rest R gebunden ist, enthalten sind.

**7.** Zusammensetzung nach einem oder mehreren der Patentansprüche 1 bis 6, dadurch gekennzeichnet, daß sie zusätzlich als Komponente c) einen nichtionogenen Dispergator, oder ein Gemisch von nichtionogenen Dispergatoren enthält.

**8.** Zusammensetzung nach Patentanspruch 7, dadurch gekennzeichnet, daß sie ein Alkylpolyglykosid als Dispergator enthält.

**9.** Zusammensetzung nach einem oder mehreren der Patentansprüche 1 bis 8, dadurch gekennzeichnet, daß die Zusammensetzung zusätzlich als Komponente d) ein dispergiertes Polyethylenwachs enthält.

**10.** Zusammensetzung nach einem oder mehreren der Patentansprüche 1 bis 9, dadurch gekennzeichnet, daß sie die Komponenten a) bis d) und Wasser in folgenden Gewichtsverhältnissen enthält

| | | | | |
|---|---|---|---|---|
| Komponente a): | 5 | bis | 40 | Gew.teile |
| Komponente b): | 5 | bis | 10 | Gew.teile |
| Komponente c): | 0 | bis | 15 | Gew.teile |
| Komponente d): | 0 | bis | 15 | Gew.teile |
| Wasser: | 40 | bis | 80 | Gew.teile. |

**11.** Verfahren zur Herstellung einer Zusammensetzung gemäß einem oder mehreren der Ansprüche 1 bis 10, dadurch gekennzeichnet, daß man eine Komponente a), welche einen Rest R der folgenden allgemeinen Formel enthält,

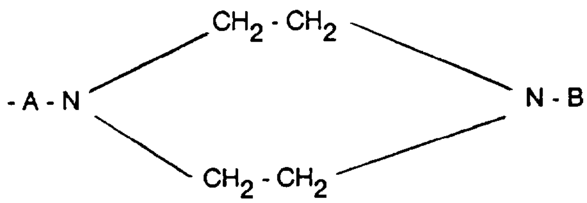

Wasser und eine Komponente c) miteinander vereinigt, mittels Zugabe einer Säure einen pH-Wert von 3,5 bis 4,0 einstellt, das Gemisch bei einer Temperatur im Bereich von 60 bis 110°C homogenisiert und dann Komponente b) hinzufügt, wobei in der für den Rest R angegebenen allgemeinen Formel A für einen Alkylenrest mit 1 bis 6 Kohlenstoffatomen steht, der durch eine -O-, -S- oder -NH-Brücke unterbrochen sein kann, und B für Wasserstoff oder einen Alkylrest mit 1 bis 4 Kohlenstoffatomen, vorzugsweise für $CH_3$ steht, wobei Komponente c) ein nichtionogener Dispergator oder ein Gemisch von nichtionogenen Dispergatoren ist.

**12.** Verfahren nach Patentanspruch 11, dadurch gekennzeichnet, daß die Säure eine starke Mineralsäure ist, daß man nach der Homogenisierung den pH-Wert der Dispersion durch Zugabe einer Base auf einen Wert von 5,5 bis 7 einstellt und daß man Komponente b) vor oder nach Zugabe der Base, vorzugsweise vor deren Zugabe, hinzufügt.

**13.** Verfahren nach Patentanspruch 12, dadurch gekennzeichnet, daß die Säure Salzsäure oder Schwefelsäure und die Base Natriumhydroxid oder Kaliumhydroxid ist.

**14.** Verwendung einer Zusammensetzung gemäß einem oder mehreren der Ansprüche 1 bis 10 zur Behandlung von Fasermaterialien.

**15.** Verwendung nach Patentanspruch 14, dadurch gekennzeichnet, daß Flächengebilde aus Cellulose enthaltenden oder aus Cellulose bestehenden Materialien behandelt werden.

## Claims

**1.** An aqueous composition in the form of a solution or dispersion containing as component a) an organopolysiloxane carrying on average at least one radical R bonded to a silicon atom, said radical R being bonded to this silicon

atom via a carbon atom and containing at least one amino group or one amido group, characterized in that the composition is free from amphoteric and ionic surfactants and contains as component b) a compound of formula (I) or a mixture of compounds of formula (I):

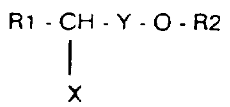

(I)

in which

X is -OH or $-NH_2$.
Y is

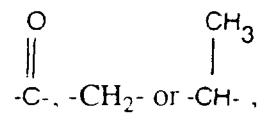

R1 is H or $CH_3$.
R2 is an unbranched or branched alkyl radical having 1 to 4 carbon atoms, which can be substituted by an OH or OR3 group, and
R3 is an unbranched or branched alkyl radical having 1 to 4 carbon atoms, which can be substituted by an OH group.

**2.** A composition according to claim 1, characterized in that component b) is methyl lactate, ethyl lactate, isopropyl lactate or an ether derived from two molecules of propylene-1,2-glycol by the elimination of 1 molecule of water, or in that component b) is a mixture of such compounds.

**3.** A composition according to claim 1 or 2, characterized in that the radical R present in component a) is a radical of the general formula

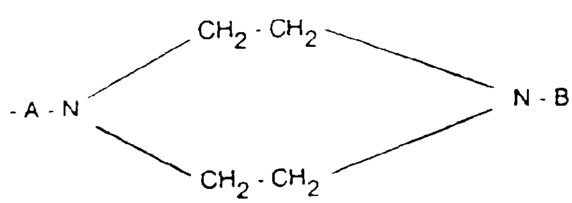

in which A is an alkylene radical having 1 to 6 carbon atoms, which can be interrupted by an -O-, -S- or -NH- bridge, and B is hydrogen or an alkyl radical having 1 to 4 carbon atoms, preferably $CH_3$.

**4.** A composition according to claim 1 or 2, characterized in that the radical R present in component a) is a radical of general formula (II), (III) or (IV):

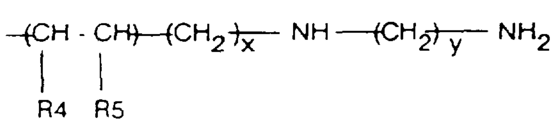

(II)

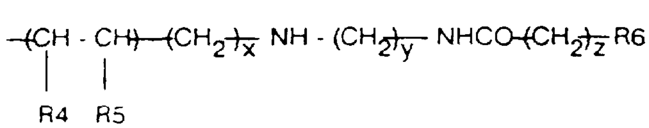

(III)

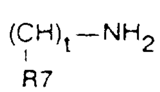

(IV)

in which all the radicals R4, R5 and R7 independently of one another are hydrogen or a methyl group, except that at least one of the radicals R4 and R5 is hydrogen, x is a number from 0 to 3, t, y and z are each a number from 2 to 4 and R6 is hydrogen or a hydroxyl group.

**5.** A composition according to one or more of claims 1 to 4, characterized in that component a) is a polydimethylsiloxane in which one or more methyl groups, but at most one methyl group on one and the same Si atom, have been replaced in each case by one radical R.

**6.** A composition according to one or more of claims 1 to 5, characterized in that component a) contains on average 5 to 1000 silicon atoms to which a radical R is not bonded per silicon atom to which a radical R is bonded.

**7.** A composition according to one or more of claims 1 to 6, characterized in that it additionally contains a non-ionic dispersant or a mixture of non-ionic dispersants as component c).

**8.** A composition according to claim 7, characterized in that it contains an alkyl polyglycoside as dispersant.

**9.** A composition according to one or more of claims 1 to 8, characterized in that the composition additionally contains a dispersed polyethylene wax as component d).

**10.** A composition according to one or more of claims 1 to 9, characterized in that it contains components a) to d) and water in the following proportions by weight:

| | |
|---|---|
| Component a): | 5 to 40 parts by weight |
| Component b): | 5 to 10 parts by weight |
| Component c): | 0 to 15 parts by weight |
| Component d): | 0 to 15 parts by weight |
| Water: | 40 to 80 parts by weight |

**11.** A process for the preparation of a composition according to one or more of claims 1 to 10, characterized in that a component a) containing a radical R of the following general formula:

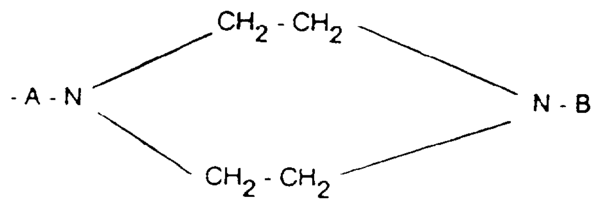

water and a component c) are combined, the pH is adjusted to 3.5 to 4.0 by the addition of an acid, the mixture is homogenized at a temperature in the range from 60 to 110°C and then component b) is added, A in the general formula given for the radical R being an alkylene radical having 1 to 6 carbon atoms, which can be interrupted by an -O-. -S- or -NH- bridge, and B being hydrogen or an alkyl radical having 1 to 4 carbon atoms, preferably $CH_3$, component c) being a non-ionic dispersant or a mixture of non-ionic dispersants.

**12.** A process according to claim 11, characterized in that the acid is a strong mineral acid, the pH of the dispersion is adjusted to a value of 5.5 to 7 by the addition of a base after the homogenization and component b) is added before or after the base, preferably before.

**13.** A process according to claim 12, characterized in that the acid is hydrochloric acid or sulphuric acid and the base is sodium hydroxide or potassium hydroxide.

**14.** The use of a composition according to one or more of claims 1 to 10 for the treatment of fibre materials.

**15.** The use according to claim 14, characterized in that textile fabrics of materials containing cellulose or materials made of cellulose are treated.

## Revendications

**1.** Composition aqueuse sous forme d'une solution ou d'une dispersion qui contient, comme constituant (a) un organo polysiloxane comportant en moyenne au moins un reste R fixé sur un atome de silicium, et qui est fixé par l'intermédiaire d'un atome de carbone à cet atome de silicium, le reste R contenant au moins un groupe amino ou un groupe amido, composition caractérisée par le fait que la composition est dépourvue de tensio-actifs amphotères et dépourvue de tensio-actifs ioniques, et contient, comme constituant (b), un composé de formule (I) ou un mélange de composés de formule (I) :

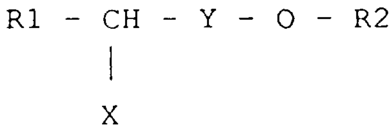

(I)

dans laquelle :

X représente -OH ou $-NH_2$ ,
Y représente

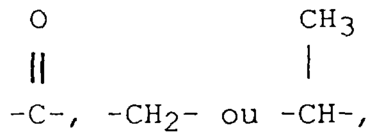

R1 représente H ou $CH_3$ ,
R2 représente un reste alkyle non ramifié ou ramifié, comportant 1 à 4 atomes de carbone, et qui peut présenter un groupe -OH ou -OR3 comme substituant,
R3 représente un reste alkyle non ramifié ou ramifié, comportant 1 à 4 atomes de carbone, qui peut présenter un groupe -OH comme substituant.

**2.** Composition selon la revendication 1, caractérisée en ce que le constituant (b) est du lactate de méthyle, du lactate d'éthyle, du lactate d'isopropyle ou un éther qui dérive, par séparation d'une molécule d'eau, de deux molécules de propylène glycol-(1,2), ou en ce que le constituant (b) est un mélange de tels composés.

**3.** Composition selon la revendication 1 ou 2, caractérisée en ce que le reste R contenu dans le constituant (a) est un reste de formule générale

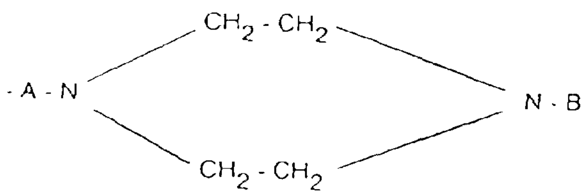

dans laquelle A représente un reste alkylène ayant 1 à 6 atomes de carbone, qui peut être interrompu par un pont -O-, -S- ou -NH-, et B représente un atome d'hydrogène ou un reste alkyle ayant 1 à 4 atomes de carbone, avantageusement B représentant $CH_3$.

**4.** Composition selon la revendication 1 ou 2, caractérisée par le fait que le reste R, contenu dans le constituant (a), est un reste de formule générale (II), (III) ou (IV)

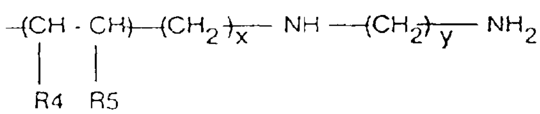

(II)

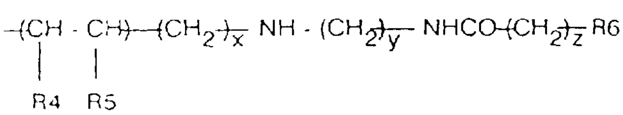

(III)

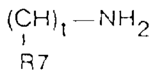

(IV)

tous les restes R4, R5 et R7 représentant chacun, indépendamment l'un de l'autre, un atome d'hydrogène ou un groupe méthyle, au moins l'un des restes R4 et R5 représentant cependant un atome d'hydrogène; x est un nombre valant 0 à 3; t, y et z sont chacun un nombre valant 2 à 4; R6 représente un atome d'hydrogène ou un groupe hydroxyle.

**5.** Composition selon une ou plusieurs des revendications 1 à 4, caractérisée en ce que le constituant (a) est un polydiméthyl siloxane, dans lequel un ou plusieurs groupes méthyle est ou sont chaque fois remplacé(s) par un reste R, mais cependant au maximum un seul groupe méthyle est ainsi remplacé sur un seul et même atome de Si.

**6.** Composition selon une ou plusieurs des revendications 1 à 5, caractérisée en ce que, dans le constituant (a) sont contenus en moyenne 5 à 1000 atome(s) de silicium sur lesquels aucun reste R n'est fixé, par atome de silicium sur lequel est fixé un reste R.

**7.** Composition selon une ou plusieurs des revendications 1 à 6, caractérisée par le fait qu'elle contient en outre, comme constituant (c), un dispersant non ionogène ou un mélange de dispersants non ionogènes.

**8.** Composition selon la revendication 7, caractérisée en ce qu'elle contient comme dispersant un alkyl polyglycoside.

**9.** Composition selon une ou plusieurs des revendications 1 à 8, caractérisée en ce que la composition contient en outre, comme constituant (d), une cire de polyéthylène dispersée.

**10.** Composition selon une ou plusieurs des revendications 1 à 9, caractérisée par le fait qu'elle contient les constituants (a) à (d) et l'eau en les rapports pondéraux suivants :

| | |
|---|---|
| Constituant a) : | 5 à 40 parties en poids |
| Constituant b) : | 5 à 10 parties en poids |
| Constituant c) : | 0 à 15 parties en poids |
| Constituant d) : | 0 à 15 parties en poids |
| Eau : | 40 à 80 parties en poids |

**11.** Procédé pour préparer une composition selon une ou plusieurs des revendications 1 à 10, caractérisé par le fait que l'on réunit un constituant (a), qui contient un reste R répondant à la formule générale suivante :

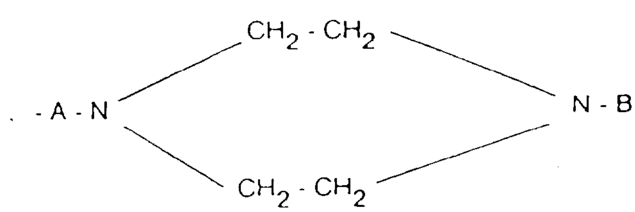

de l'eau et un constituant (c), on ajuste par addition d'un acide à une valeur de pH de 3,5 à 4,0; on homogénéise le mélange à une température comprise entre 60 et 110°C, puis l'on introduit le constituant (b), et, dans la formule générale indiquée pour le reste R, le symbole A représente un reste alkylène ayant 1 à 6 atomes de carbone, qui peut être interrompu par un pont -O-, -S- ou -NH-, et le symbole B représente un atome d'hydrogène ou un reste alkyle ayant 1 à 4 atomes de carbone, avantageusement $CH_3$, le constituant (c) étant un dispersant non ionogène ou un mélange de dispersants non ionogènes.

**12.** Procédé selon la revendication 11, caractérisé par le fait que l'acide est un acide minéral fort; que, après l'homogénéisation, on ajuste la valeur du pH de la dispersion, par addition d'une base, à une valeur de 5,5 à 7 et que l'on introduit le constituant (b) avant ou après l'addition de la base, avantageusement avant cette addition.

**13.** Procédé selon la revendication 12, caractérisé en ce que l'acide est l'acide chlorhydrique ou l'acide sulfurique, et la base est l'hydroxyde de sodium ou l'hydroxyde de potassium.

**14.** Utilisation d'une composition selon une ou plusieurs des revendications 1 à 10 pour le traitement de matières fibreuses.

**15.** Utilisation selon la revendication 14, caractérisée par le fait que l'on traite des surfaces textiles en des matières contenant de la cellulose ou consistant en de la cellulose.